# DEMANDE DE BREVET EUROPEEN

(11) **EP 4 528 147 A1**
(43) Date de publication de la demande: **26.03.2025**
(21) Numéro de dépôt: 24190355.8
(22) Date de dépôt: 23.07.2024
(51) Int. Cl.: F17C 13/02

(54) **SYSTÈME DE SURVEILLANCE D'UN RÉSEAU DE DISTRIBUTION DE GAZ MÉDICAUX D'UNE INSTALLATION HOSPITALIÈRE**

(30) Priorité: 20.09.2023 FR 2309963
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BOULANGER, Thierry, 75007 Paris (FR)
(74) Mandataire: Air Liquide

(57) **Abrégé**

L'invention concerne une installation hospitalière de distribution de gaz (100) comprenant un réseau de distribution de gaz (101) comprenant des conduites de gaz (21, 31, 32) agencées dans un établissement hospitalier et un système de surveillance (102) du réseau de distribution de gaz (101), en particulier d'oxygène ou d'air médical, comprenant une source de gaz (1) reliée fluidiquement à un conduit de gaz principal (21) ; un dispositif régulateur de pression (23) agencé sur le conduit de gaz principal (21) ; plusieurs conduits de gaz secondaires (31, 32) agencés en aval du dispositif régulateur de pression (23) véhiculant du gaz sous pression, et des jauges de contrainte (6, 6a, 6b) les conduits de gaz principal et/ou secondaires (21, 31, 32).

## Description

L'invention concerne une installation hospitalière de distribution de gaz comprenant un réseau de distribution de gaz comprenant des conduites, lignes ou canalisations de gaz, et un système de surveillance non-invasif agencé sur le réseau de distribution de gaz, ladite installation étant agencée dans un établissement hospitalier, le système de surveillance permettant de fournir des informations relatives à la distribution des gaz dans un ou plusieurs services de l'établissement hospitalier, en particulier pour alerter en cas de surcharge localisée, c'est-à-dire de surpression d'une portion du réseau de distribution du gaz.

Dans les établissements hospitaliers, tels les hôpitaux, les cliniques ou autres, il est nécessaire d'amener des gaz médicaux, en particulier de l'air et de l'oxygène (O₂) de qualité médicale, jusqu'aux différents points d'utilisation au sein de ces établissements, par exemple les services de réanimation ou d'urgence, les salles d'opération...

L'alimentation en gaz se fait typiquement via une installation hospitalière de distribution de gaz amenant le gaz jusqu'au réseau de gaz de l'hôpital.

Ainsi, généralement, les gaz médicaux sont stockés dans des réservoirs ou capacités de stockage de grande capacité, agencés à l'extérieur de l'établissement hospitalier qui sont réapprovisionnés en gaz par des camions citernes servant à acheminer les gaz depuis leur site de production jusqu'aux établissements hospitaliers.

Les gaz sont ensuite distribués aux différents points d'utilisation, c'est-à-dire les différents services hospitaliers, par des conduites, lignes ou canalisations de gaz, couramment appelé « réseau de distribution de gaz » ou « réseau de gaz ».

Or, opérer un suivi ou une surveillance de la distribution des gaz médicaux dans les établissements hospitaliers est primordial pour pouvoir connaître la consommation spécifique des différents services et gérer les réapprovisionnements de sorte d'éviter toute rupture d'approvisionnement en gaz qui pourrait compromettre la sécurité des patients, comme lors de la pandémie liée au Covid-19, où les consommations en gaz médicaux, notamment en oxygène (O₂), ont été décuplées du fait d'un afflux très important et inhabituel de patients à traiter.

Par ailleurs, l'émergence de nouvelles techniques de prise en charge des patients, telle que l'oxygénation à haut débit ou « HFOT » (pour *High Flow Oxygen Therapy*), a exacerbé le besoin de volumes d'oxygène importants, en particulier dans les services de réanimation, donc la mise en place, là encore, d'un suivi étroit des réseaux de distribution de gaz hospitaliers et de leur consommation.

Or, un réseau de distribution de gaz d'une telle installation hospitalière de distribution de gaz est censé délivrer, sur une plage de débits donnés, une pression gazeuse nominale aux différentes prises de distribution des gaz, c'est-à-dire les prises murales hospitalières, qu'il alimente en gaz. Ces prises murales sont agencées dans les services ou les pièces de l'établissement hospitalier. Ces prises murales assurent le raccordement fluidiquement et l'alimentation en gaz de dispositifs médicaux, tels que débitmètres, ventilateurs médicaux, dispositifs de délivrance d'oxygène à haut débit... servant à fournir le gaz aux patients en ayant besoin. Un exemple de prise murale hospitalière est donné par EP-A-3922895.

Il appartient aux techniciens installant le réseau de gaz médicaux et aux responsables techniques de l'hôpital ou analogue, de déterminer les consommations attendues (avec un facteur de sécurité) afin de dimensionner le réseau de gaz médicaux, notamment de bien choisir le diamètre des conduites de gaz ou analogues, afin de garantir une pression gazeuse nominale dans la plage de débits souhaitée, notamment en fonction des besoins de chaque service hospitalier, lesquels sont variables d'un service à l'autre. En général, la pression nominale de service est de l'ordre de 4 à 5 bar relatifs, tel que préconisé par la norme ISO7396-1.

Toutefois, malgré les précautions prises lors de l'installation d'un réseau de gaz médicaux d'une installation hospitalière de distribution de gaz, il arrive qu'en cas de pic de consommation, le réseau de gaz médicaux ne puisse subvenir à la demande en gaz et donc maintenir la pression nominale, ce qui entraine le dysfonctionnement des dispositifs médicaux connectés aux prises murales puisqu'ils sont alors « sous-alimentés » en gaz.

On comprend que cette insuffisance de gaz, e.g. d'oxygène, engendre un problème de sécurité pour les patients et par ailleurs un stress important pour le personnel soignant, en particulier lorsque la demande en gaz est très importante, comme pendant la pandémie liée au Covid-19 ou lors d'un traitement de type « HFOT ».

Afin de tenter d'y répondre, EP1983251 propose une installation de débitmètres en différentes localisations du réseau de distribution de gaz médicaux de manière à opérer une surveillance du réseau de distribution de gaz, i.e., de la distribution de gaz. En effet, en connaissant les niveaux de consommation de gaz et la nature du réseau, il est possible de détecter toute augmentation de consommation de gaz par un service donné et dès lors d'anticiper une saturation à venir de ce service de sorte de pouvoir réorienter de façon précoce des patients vers d'autres services dans lesquels la demande en gaz est moins importante et donc d'éviter les dysfonctionnements d'approvisionnement en gaz.

Toutefois, devoir installer des débitmètres en différents points ou sites du réseau de gaz d'installations hospitalières existantes n'est pas idéal car cela nécessite, aux différents sites du réseau devant recevoir un débitmètre, d'interrompre, i.e. couper, le conduit du réseau pour y installer le débitmètre, ce qui peut conduire à des entrées de poussières ou d'autres polluants dans le conduit ou le réseau de gaz et engendrer alors un risque de dysfonctionnement des équipements situés en aval, voire même conduire à des accidents, tels des incendies ou autres, en particulier en présence d'oxygène.

De plus, interrompre un conduit d'un réseau de gaz d'une installation hospitalière existante nécessite une mise en place d'une solution alternative d'alimentation en gaz afin d'assurer une continuité de l'approvisionnement en gaz des patients, pendant toute la durée de leurs interventions ou traitements, ce qui engendre des contrainte logistiques, organisationnelles et/ou n'est pas toujours possible ou aisé à mettre en oeuvre.

Dès lors, un problème est de pouvoir opérer une surveillance efficace d'un réseau distribution de gaz d'une installation hospitalière de distribution de gaz agencée dans un établissement hospitalier, typiquement le réseau d'une installation hospitalière de distribution de gaz existante, sans avoir à interrompre les conduits du réseau de l'installation hospitalière et/ou tout en assurant une continuité d'approvisionnement en gaz aux patients, c'est-à-dire de pouvoir mesurer la consommation en gaz médicaux en différents endroits du réseau de distribution de gaz considéré, sans rencontrer les inconvénients susmentionnés.

Une solution de l'invention concerne alors une installation hospitalière de distribution de gaz comprenant un réseau de distribution de gaz comprenant des conduites de gaz agencées dans un établissement hospitalier, tel un hôpital, une clinique, un centre de soins ou analogue, et un système de surveillance du réseau de distribution de gaz, et comprenant en outre:
- une source de gaz reliée fluidiquement à un conduit de gaz principal du réseau de distribution de gaz de l'installation,
- un dispositif régulateur de pression agencé sur le conduit de gaz principal, le conduit de gaz principal se ramifiant en plusieurs conduits de gaz secondaires, en aval du dispositif régulateur de pression, lesdits conduit de gaz principal et secondaires véhiculant du gaz sous pression, et
- des jauges de contrainte agencées en aval du dispositif régulateur de pression, sur les conduits de gaz principal et/ou secondaires.

De plus, dans le système de surveillance de l'installation hospitalière de distribution de gaz selon l'invention, les jauges de contrainte sont chacune associées à une unité de contrôle coopérant avec un module de télécommunication. Chaque jauge de contrainte comprend une piste résistive déformable configurée pour se déformer proportionnellement à la pression du gaz s'exerçant dans le conduit de gaz sur lequel la jauge de contrainte considérée est agencée.

Par ailleurs, l'unité de contrôle est configurée pour :
- déterminer une résistance ou résistivité (R) de chaque jauge de contrainte à partir de la déformation de la piste résistive de la jauge de contrainte considérée et d'une valeur de résistivité de référence (Ro), et
- déterminer une pression de gaz à partir de la résistivité (R) de chaque jauge de contrainte, chaque pression de gaz déterminée reflétant la pression du gaz s'exerçant dans le conduit de gaz sur lequel la jauge de contrainte considérée est agencée.

En outre, l'unité de contrôle et le module de télécommunication sont configurés pour assurer une transmission de données, via ledit module de télécommunication, de l'unité de contrôle vers au moins une plateforme de traitement de données distante, lesdites données incluant au moins une pression de gaz déterminée par l'unité de contrôle.

Selon le mode de réalisation considéré, l'installation hospitalière de distribution de gaz et/ou le système de surveillance équipant ladite installation hospitalière de distribution de gaz de l'invention peut/peuvent comprendre l'une ou plusieurs des caractéristiques suivantes :
- le réseau de distribution de gaz comprend des conduites de gaz agencées dans l'établissement hospitalier, en particulier sur une ou des parois de l'établissement hospitalier, i.e. murs, cloisons ou analogues.
- les conduites de gaz ont un diamètre compris entre 10 et 50 mm, préférentiellement de l'ordre de 15 mm.
- la source de gaz comprend de l'oxygène ou de l'air.
- le dispositif régulateur de pression est configuré pour contrôler la pression et garantir une pression stable comprise entre 3 et 7 bar relatifs, de préférence environ entre 4 et 5 bar relatifs, avantageusement égale à 4 bar environ.
- les jauges de contrainte comprennent une jauge de référence et des jauges additionnelles ou secondaires.
- chaque jauge de contrainte additionnelle est appairée à la jauge de contrainte de référence.
- les jauges de contrainte sont fixées à/sur la surface périphérique externe des conduits de gaz.
- chaque unité de contrôle comprend au moins un (micro)processeur, en particulier un microcontrôleur.
- le (micro)processeur ou microcontrôleur de chaque unité de contrôle est agencé sur (au moins) une carte électronique.
- la carte électronique est agencée dans l'unité de contrôle.
- chaque jauge de contrainte comprend une piste résistive déformable agencée sur un support comprenant des moyens de fixation permettant une fixation à la paroi périphérique externe d'un conduit de gaz.
- chaque jauge de contrainte comprend une piste résistive agencée sur un support, en particulier un support en silicone ou analogue.
- chaque jauge de contrainte comprend une piste résistive apte à se déformer, c'est-à-dire se rétracter ou se dilater, lors d'une déformation de la paroi du conduit de gaz sur lequel la jauge de contrainte est fixée.
- la plateforme de traitement de données distante comprend un serveur informatique, de préférence un serveur « cloud ».
- le module de télécommunication est en outre configuré pour communiquer en réception avec un dispositif électronique à interface graphique configuré pour envoyer des données au module de télécommunication.
- le dispositif électronique est une tablette numérique, un téléphone multifonction ou un ordinateur portable, ou analogue.
- l'unité de contrôle est configurée pour déterminer, à partir de la valeur de résistivité R déterminée et d'une base de donnée donnant une correspondance entre pression et résistivité R, la pression gazeuse régnant dans lesdits conduits de gaz principal et secondaires véhiculant du gaz sous pression agencés en aval du dispositif régulateur de pression.
- l'unité de contrôle comprend des moyens de mémorisation pour mémoriser la valeur de résistivité de référence (Ro) et la base de donnée.
- les moyens de mémorisation comprennent une mémoire flash ou analogue.
- alternativement, la base de donnée est mémorisée au sein du processeur de chque unité de contrôle.
- l'unité de contrôle est configurée pour déterminer le ou les débits de gaz circulant dans le premier conduit secondaire et/ou dans le second conduit secondaire véhiculant du gaz sous pression agencés en aval du dispositif régulateur de pression, à partir d'au moins une mesure de pression.
- elle comprend au moins une plateforme de traitement de données distante, c'est-à-dire située à typiquement plusieurs centaines de mètres, voire un à plusieurs kilomètres de l'installation.
- la plateforme de traitement de données distante est configurée pour commander un affichage sur un écran d'affichage, le ou les débits de gaz circulant dans le premier conduit secondaire et/ou dans le second conduit secondaire.
- les jauges de contrainte sont alimentées électriquement, en particulier leur piste résistive.
- la source de gaz comprend au moins un réservoir de stockage de gaz sous forme liquide ou gazeuse, en particulier de l'air ou de l'oxygène liquide (LOX).
- une unité de télémétrie est associé audit réservoir de stockage de gaz de manière à déterminer la quantité de gaz résiduel dans ledit réservoir de stockage de gaz, en particulier un niveau de LOX.
- l'unité de télémétrie est configurée pour transmettre à distance, via un réseau de télécommunication, à un fournisseur de gaz, les mesures de quantité de gaz résiduel, en particulier le niveau de LOX.
- un vaporiseur de gaz est agencé en sortie, i.e. en aval, dudit réservoir de stockage de gaz et configuré pour transformer le LOX en oxygène gazeux, notamment en réchauffant le LOX.
- l'extrémité aval du conduit principal se ramifie au moins en un premier tronçon ou premier conduit secondaire et en un second tronçon ou second conduit secondaire.
- le premier conduit secondaire comprend une pluralité de premières sous-ramifications.
- le second conduit secondaire comprend une pluralité de secondes sous-ramifications.
- au moins une partie des premières sous-ramifications et/ou les secondes sous-ramifications sont reliées fluidiquement à des prises murales de distribution de gaz, en particulier des prises de fourniture d'oxygène gazeux ou d'air.
- le réseau de distribution de gaz comprend des conduites de gaz alimentant des prises de fourniture de gaz murales, de préférence avec de l'oxygène ou de l'air.
- les prises de fourniture de gaz murales sont portées par une ou des parois de l'établissement hospitalier, i.e. murs, cloisons ou analogues.
- l'établissement hospitalier comprend des pièces, telles des chambres ou des salles de soins, dans lesquelles sont agencées les prises de fourniture de gaz murales.
- la piste résistive de chaque jauge de contrainte est configurée pour que sa résistance ou résistivité R soit modifiée par rapport à une valeur résistive de repos R₀ proportionnellement à la déformation subie par la piste résistive considérée.
- la piste résistive de chaque jauge de contrainte est configurée pour être modifiée en compression (R<R₀) ou une tension (R>R₀).
- la valeur de la résistance ou résistivité R de la piste résistive de chaque jauge de contrainte est déterminée par l'unité de contrôle, typiquement par le processeur ou microcontrôleur.
- une source de courant électrique alimente en courant électrique, chaque unité de contrôle, en particulier une batterie, notamment rechargeable, ou le secteur (110/220V).
- la source de courant électrique alimente en outre en courant électrique, les jauges de contrainte et les modules de télécommunication.
- chaque jauge de contrainte est configurée pour être paramétrable (i.e. données de paramétrage) à distance via un dispositif indépendant comprenant une interface graphique et des moyens de communication, notamment une tablette numérique, un téléphone multifonction, un ordinateur ou analogue.
- le module de communication de chaque jauge de contrainte est configuré pour recevoir les données de paramétrage provenant du dispositif indépendant.
- les paramètres de chaque jauge de contrainte comprennent un identifiant unique (ID) de jauge de contrainte, le diamètre D du conduit de gaz sur lequel la jauge est agencée, une information de localisation relative par rapport à une jauge de contrainte de référence, une donnée d'appairage et/ou une donnée temporelle (i.e. horodatage).
- selon un autre mode de réalisation, le processeur de l'unité de contrôle est programmé pour inclure directement les paramètres de chaque jauge.
- elle comprend une jauge de contrainte de référence agencée dans la région du site de ramification du conduit principal.
- elle comprend des jauges de contrainte additionnelles agencées sur les premier et second conduits secondaires.
- chaque jauge de contrainte est configurée pour envoyer des données vers la plateforme de traitement sous forme d'ensembles ou de « paquets » de données.
- chaque ensemble ou paquet de données inclut au moins une valeur de pression.
- chaque ensemble ou paquet de données inclut une ou plusieurs données additionnelles choisies parmi une donnée temporelle (i.e. horodatage), un identifiant de jauge (ID), un diamètre des conduit de gaz, un identifiant de la jauge de contrainte de référence et une distance séparant la jauge de contrainte de référence et de la jauge de contrainte considérée.
- la plateforme de traitement est configurée pour opérer un prétraitement de toute ou partie des données provenant des jauges de contrainte, en particulier une resynchronisation des pressions mesurées par les jauges de contrainte.
- la plateforme de traitement est configurée pour opérer en outre un traitement de toute ou partie des données provenant des jauges de contrainte pour déterminer le ou les débits de gaz circulant dans le ou les conduits de gaz, en particulier dans le premier conduit secondaire et dans le second conduit secondaire.
- la plateforme de traitement est configurée pour commander un affichage d'au moins le ou les débits déterminées sur un écran d'affichage à destination d'un utilisateur, tel un opérateur de réseau, chargé de la surveillance efficace du réseau de distribution de gaz au sein de l'établissement hospitalier considéré.

L'invention concerne aussi un établissement hospitalier, i.e. un bâtiment ou une infrastructure hospitalière, comprenant une installation hospitalière de distribution de gaz selon l'invention.

Par ailleurs, le procédé de surveillance d'une installation hospitalière de distribution de gaz comprenant un réseau de distribution de gaz comprenant des conduites de gaz agencées dans un établissement hospitalier et un système de surveillance du réseau de distribution de gaz selon l'invention, dans lequel :
ii) on alimente le conduit de gaz principal du réseau de distribution de gaz avec un gaz provenant de la source de gaz,
ii) on détermine la résistivité (R) de chacune des jauges de contrainte agencées sur le réseau de distribution de gaz à partir de la déformation de la piste résistive de la jauge de contrainte considérée et d'une valeur de résistivité de référence (Ro),
iii) on détermine la pression de gaz s'exerçant dans le conduit de gaz sur lequel la jauge de contrainte considérée est agencée, à partir de la résistivité (R) de la jauge de contrainte considérée,
iv) on transmet au moins une pression de gaz déterminée à au moins une plateforme de traitement de données distante,
v) on détermine, au sein de la plateforme de traitement de données distante, au moins un débit de gaz à partir d'au moins une mesure de pression, et
vi) on opère un affichage dudit au moins un débit de gaz déterminé.

De plus, l'invention concerne aussi un établissement hospitalier, tel qu'un hôpital ou analogue, au sein duquel sont agencés une installation hospitalière de distribution de gaz comprenant un réseau de distribution de gaz comprenant des conduites de gaz et un système de surveillance du réseau de distribution de gaz selon l'invention, notamment comme décrit ci-dessus.

Le réseau de distribution de gaz, i.e. les conduites de gaz, est fixé aux parois de l'établissement hospitalier, c'est-à-dire aux murs, cloisons, plafonds ou autres.

L'invention va maintenant être mieux comprise grâce à la description détaillée suivante, faite à titre illustratif mais non limitatif, en référence aux figures annexées parmi lesquelles :
- Fig. 1 schématise une installation hospitalière de distribution de gaz comprenant un réseau de distribution de gaz médicaux agencée dans un établissement hospitalier alimenté par une source de gaz selon l'art antérieur.
- Fig. 2 schématise une jauge de contrainte connectée permettant de mesurer de façon non-invasive la pression locale régnant dans un conduit délivrant du gaz médical.
- Fig. 3 schématise une installation hospitalière de distribution de gaz selon l'invention, laquelle est analogue à celle de Fig. 1, mais comprend des jauges de contrainte connectées agencées sur le réseau de distribution de gaz et un système de surveillance, conformément à la présente invention.

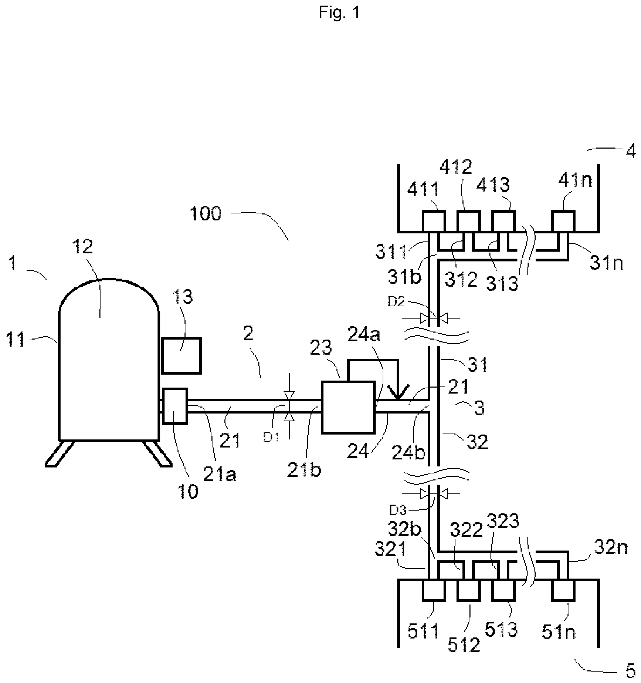

Fig. 1 schématise un mode de réalisation d'une installation hospitalière de distribution de gaz 100 comprenant un réseau de distribution de gaz médicaux classique, agencé au sein d'un établissement hospitalier (non schématisé) alimenté par une source de gaz 1, à savoir ici un réservoir 11 de stockage d'O₂ sous forme liquide et/ou gazeuse stocké dans son volume intérieur 12.

Une unité de télémétrie 13 mesure en permanence le niveau d'O₂ liquide dans le réservoir de stockage 11 et transmet à distance, via un réseau de communication, tel que GSM, internet ou autre, les mesures de niveau d'O₂ liquide à un fournisseur de gaz afin de l'alerter lorsqu'un seuil bas prédéfini est atteint pour qu'il vienne remplir à nouveau le réservoir de stockage 11 avec de l'oxygène liquide amené par camion-citerne ou analogue.

Afin de transformer l'oxygène liquide en oxygène gazeux, on met en oeuvre un vaporiseur de gaz 10 qui est agencé en aval du réservoir de stockage 11. La sortie du vaporiseur de gaz 10 est reliée fluidiquement à une entrée 21a d'une portion amont 21 d'un conduit d'alimentation principal 2, c'est-à-dire une canalisation de gaz principale, de manière à l'alimenter en oxygène gazeux. La portion amont 21 de premier diamètre D1 alimente quant à elle (en 21b) un régulateur de pression 23, tel un dispositif détendeur de gaz, agencé sur le conduit d'alimentation principal 2 et relié fluidiquement à une sortie 21b de la portion amont 21. Préférentiellement, le premier diamètre D1 est égal à plusieurs dizaines de millimètres, par exemple d'au moins 40mm.

Le régulateur de pression 23 est relié par ailleurs à une extrémité amont 24a d'une portion aval 24 du conduit de gaz principal 2 afin de lui fournir de l'oxygène gazeux à pression donnée. Autrement dit, le régulateur de pression 23 garantit, i.e. fournit, une pression stable dans la portion aval 24 du conduit principal 2, dite « pression nominale de service ». Avantageusement, la pression nominale de service est comprise environ entre 4 et 5 bar relatifs, par exemple égale à 4 bar environ.

L'extrémité aval 24b de la portion aval 24 du conduit principal 2 vient se ramifier (en 24b) en un premier tronçon ou premier conduit secondaire 31 ayant un second diamètre D2 et, par ailleurs, en un second tronçon ou second conduit secondaire 32 ayant un troisième diamètre D3.

Les premier et second conduits secondaires 31, 32 forment un circuit de gaz secondaire 3. Ils ont des diamètres D2, D3 préférentiellement égaux, par exemple de l'ordre de 15 mm environ. Selon un mode de réalisation, on a : D2<D1 et D3<D1.

Le premier conduit secondaire 31 présente lui-même une pluralité de sous-ramifications 311-31n, respectivement, formant des lignes de gaz débouchant au niveau de prises d'oxygène murales 411à 41n, respectivement, situées dans un service 4 de l'établissement hospitalier, par exemple un service de réanimation. L'oxygène gazeux circulant dans le premier conduit secondaire 31 est donc distribué à tout ou partie des sous-ramifications 311-31n selon que les prises d'O₂ murales 411-41n sont en fonctionnement ou au repos, c'est-à-dire raccordées ou non à des dispositifs médicaux utilisant de l'oxygène, tels que débitmètres, ventilateurs mécaniques, dispositifs de délivrance d'oxygène à haut débit....

De façon similaire, le second conduit secondaire 32 alimente lui aussi une pluralité de sous-ramifications 321-32n, c'est-à-dire des lignes de gaz aboutissant elles aussi à des prises d'O₂ murales 421-42n situées dans un autre service 5 de l'établissement hospitalier, par exemple un service de soins légers.

La pression gazeuse s'exerçant au niveau des prises murales ne doit pas être inférieure à 90% de la pression nominale de service (i.e. 4 bar relatif), donc ici d'au moins 3.6 bar relatif, lorsque le réseau de distribution de gaz médicaux fonctionne dans les limites de sa gamme opérationnelle, afin de ne pas risquer que les dispositifs médicaux connectés aux prises murales 411à 41n, 321-32n dysfonctionnent et mettent en danger les patients.

La gamme opérationnelle des prises murales doit donc être déterminée en prenant compte le type de service muni de prises murales (e.g. urgences, réanimation, soins légers...), le taux d'utilisation estimé des prises murales (par exemple 75% d'utilisation) et le débit de gaz consommé au travers de chacune des prises murales en fonctionnement.

Par exemple, pour n (n>2) prises d'O₂ murales 411-41n d'un service de réanimation, on peut déterminer que 75% des prises sont utilisées à un instant donné, pour un débit moyen de 20 L/min. Ainsi, pour 20 prises (n=20), on peut envisager un débit total circulant dans le premier conduit secondaire 31 de l'ordre de 300 L/min maximum. En considérant ce débit maximum et la longueur du premier conduit secondaire 31, par exemple de plusieurs mètres à plusieurs dizaine de mètres, défini entre l'extrémité 24b de la portion aval 24 et l'extrémité aval 31b de ce premier conduit secondaire 31, on peut déterminer qu'un diamètre D2 de 15mm devrait permettre à respecter les exigences de la norme ISO 7396-1, en particulier une pression régnant à l'extrémité aval 31b du premier conduit secondaire 31 supérieure de 90% à la pression nominale de service (ici 3.6 bar relatif).

Il en va de même pour le dimensionnement du second conduit secondaire 32 alimentant quant à lui un service de soins légers 5, pour lequel on détermine qu'un débit total maximal de 320L/min pourra également être observé (i.e. 100 prises à 80% à 4L/min par exemple) et ce, pour un diamètre D3 du second conduit secondaire 32 également de 15 mm.

Dans des conditions non-habituelles ou exceptionnelles, par exemple un afflux de patients COVID...ou autre, d'une part, le taux d'occupation des prises d'O₂ murales 411- 41n peut se retrouver à 100% et, d'autre part, pour optimiser la prise en charge des patients considérés, leur oxygénation doit être assurée par des dispositifs de délivrance d'oxygène à haut débit gourmands en O₂, par exemple utilisant 60 L/min, voire plus.

Il s'ensuit alors un débit total circulant dans le premier conduit secondaire 31 d'environ 420L/min, donc bien supérieur au débit maximal initialement escompté. Or, la chute de pression entre l'extrémité 2b de la portion aval 24 et l'extrémité aval 31b du premier conduit secondaire 31 évolue selon le carré du débit circulant entre ces deux points. Elle devient donc très inférieure à la pression minimale de 3.6 bar, ce qui engendre des dysfonctionnements des dispositifs médicaux connectés aux différentes prises d'Oz murales 411-41n du service de réanimation 4 considéré.

On comprend alors l'importance de pouvoir opérer une surveillance efficace du réseau de distribution de gaz de l'installation hospitalière de distribution de gaz 100, en particulier du premier conduit secondaire 31 et du second conduit secondaire 32, pour permettre de détecter toute saturation des conduits et d'avertir, le cas échéant, un opérateur, par exemple le responsable technique supervisant le réseau de distribution de gaz médicaux, de l'imminence d'une telle saturation de l'un et/ou l'autre de ces conduits.

Une manière classique de faire serait de mesurer le débit de gaz circulant dans le premier conduit secondaire 31 alimentant le service de réanimation 4 pour déterminer le niveau de saturation de ce premier conduit secondaire 31 qui correspond au débit circulant dans le conduit 31 divisé par le débit max total autorisé. En mesurant de la même façon le niveau de saturation du second conduit secondaire 32 alimentant le service de soins légers 5, on peut déterminer que celui-ci fonctionne, par exemple, à sous capacité. Dès lors, il pourrait être décidé de transférer certains patients du service de réanimation 4 au service de soins légers 5 pour soulager le premier conduit secondaire 31.

Toutefois, cette manière d'opérer se heurte à des problèmes d'installation de capteurs de débits dédiés dans le réseau de distribution de gaz médicaux des installations hospitalières existantes du fait de l'obligation de devoir interrompre les conduits du réseau pendant la durée de l'intervention, donc ne permet pas d'assurer une continuité de l'approvisionnement en gaz des patients.

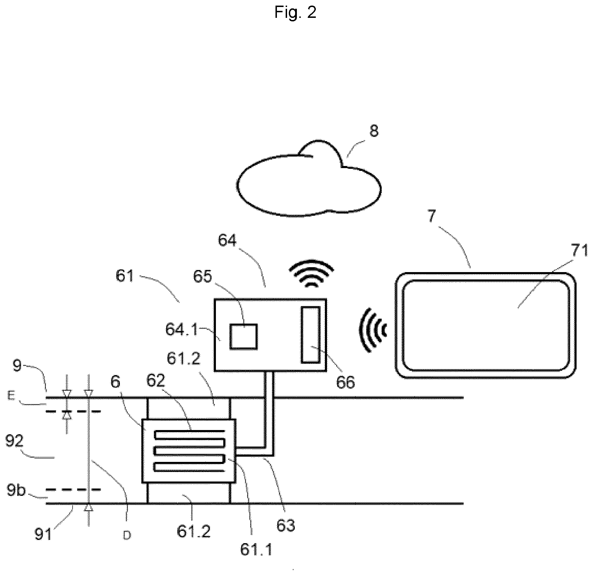

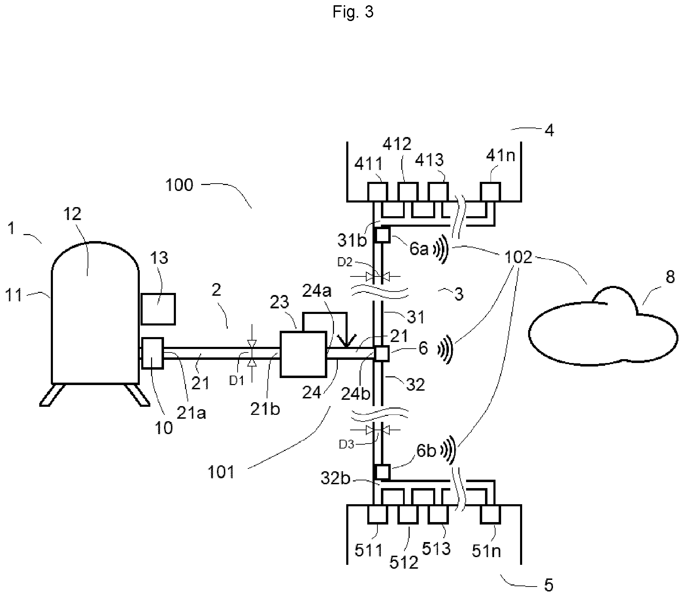

Fig. 2 schématise un agencement selon l'invention, d'un capteur non-invasif 61 connecté, appelé jauge de contrainte 6, sur un conduit de gaz 9 d'une installation hospitalière d'acheminement de gaz, tel un réseau d'oxygène ou d'air, telle celle illustrée en Fig. 3.

La jauge de contrainte 6 est reliée électriquement à une unité de contrôle 64, en particulier une (des) carte électronique 64.1 à microprocesseur 65, tel un microcontrôleur, via un câble de connexion 63 électriquement.

La jauge de contrainte 6 comprend un support 61.1, tel un substrat en silicone, ou analogue portant une piste résistive 62 déformable. Cette piste résistive 62 est apte à se déformer, c'est-à-dire se rétracter ou se dilater, sous l'action d'une contrainte mécanique, notamment en cas de déformation de la paroi 90 du conduit de gaz 9 sur lequel elle est fixée.

Les déformations de la piste résistive 62 modifient sa résistance R (aussi appelée résistivité) par rapport à une valeur résistive de repos R₀ en fonction de la déformation subie, c'est-à-dire selon que la piste résistive 62 subit une compression (R<R₀) ou une tension (R>R₀). La valeur de la résistance R de la piste résistive 62 de la jauge de contrainte 61 est déterminée par l'unité de contrôle 64, typiquement par le processeur 65 ou microcontrôleur, agencé sur la carte électronique 64.1. La détermination de la valeur de résistance R de la piste résistive 62 est usuellement réalisée au moyen d'un pont de Wheatstone (https://en.wikipedia.org/wiki/Wheatstone_bridge) piloté par le microprocesseur 65 et la carte électronique 64.1.

L'installation 100 comprend en outre un module de télécommunication 66 configuré pour opérer des émissions et/ou des réceptions de données, i.e. informations ou autres. Le module de télécommunication 66 est préférentiellement intégré à la carte électronique 64.1.

Plus précisément, le module de télécommunication 66 est configuré pour communiquer en réception avec un dispositif électronique 7 indépendant comprenant une interface graphique 71, telle une tablette numérique, un téléphone multifonction (smartphone), un ordinateur portable ou analogue, lequel dispositif électronique 7 est configuré pour envoyer des données au module de télécommunication 66. Lorsque le module de télécommunication 66 reçoit ces données, il les retransmet ou les transfère à l'unité de contrôle 64 qui les traite.

Le module de télécommunication 66 est aussi en capacité d'émettre des données, par exemple par voie cellulaire ou autre, par exemple via un protocole de communication de type LoRa ou analogue, lesquelles données peuvent ensuite être captées par exemple par une borne de réception (non représentée) faisant office de relai de communication.

Une fois reçues, ces données peuvent être traitées sur une plateforme de traitement de données 8 distante, tel un serveur informatique de type « cloud » ou analogue, puis fournies, une fois traitées, par exemple agrégées, à un opérateur, par exemple le responsable technique du réseau de distribution de gaz médicaux considéré, en particulier affichées sur un écran d'affichage à l'attention de l'opérateur.

La carte électronique 64.1 de l'unité de contrôle 64 est alimentée en courant électrique par une batterie ou par le secteur (1 10/220V), ce qui permet d'alimenter et contrôler les différents composants nécessitant de l'être, en particulier la jauge de contrainte 61, l'unité de contrôle 65 et le module de télécommunication 66.

La jauge de contrainte 6 est fixée sur la surface périphérique externe 91 du conduit de gaz 9 par un dispositif ou des moyens de fixation 61.2 adaptés, par exemple un collier, des clips ou autres, qui sont solidarisés à la jauge de contrainte 6 par collage, soudage ou autre, en particulier solidaires du support déformable 61.1 portant la piste résistive 62.

Le conduit 9 est typiquement un conduit en cuivre véhiculant un gaz médical, tel de l'O₂. Il a par exemple un diamètre externe de l'ordre de 15 mm et une épaisseur de paroi de l'ordre de 1mm. Les diamètres des conduits de gaz médicaux sont normés (EN 13348) et il n'existe dès lors qu'un nombre limité de diamètres possibles, parmi lesquels le diamètre de 15mm est le plus utilisé pour les conduits secondaires des réseaux hospitaliers.

Le gaz médical, ici de l'O₂, circule à une pression P donnée, par exemple de plusieurs bars relatifs, dans le conduit interne 92 ou lumen du conduit 9. La paroi 90 du conduit 9 va se déformer proportionnellement à la pression du gaz qu'il convoie, c'est-à-dire que le diamètre D du conduit 9 croit proportionnellement à la pression gazeuse P régnant dans le passage interne 92 du conduit 9. Le taux de déformation dépend non seulement de la pression gazeuse P dans le conduit 9 mais aussi du diamètre D et de l'épaisseur E de la paroi 90 du conduit 9, ainsi que des propriétés mécaniques du matériau du conduit 9, e.g. du cuivre (cf. module d'Young et coefficient de Poisson).

Lorsqu'il est soumis à des variations de pression, le conduit 9 (i.e. sa paroi 90) se déforme, en compression ou en tension et ces déformations se propagent, de manière (quasi-) instantanée, à la piste résistive 62 de la jauge de contrainte 6, notamment au travers de la paroi 90 du conduit 9 et des moyens de fixation 61.2, laquelle piste résistive 62 se déforme alors aussi en corrélation avec ces variations de pression.

Autrement dit, dès que la jauge de contrainte 6 est installée sur le conduit 9 et que celui-ci est soumis à une pression gazeuse interne, la piste résistive 62 de la jauge de contrainte 6 est mise en tension du fait de l'expansion du conduit 9 sous l'effet de la pression. L'unité de contrôle 64, en particulier le processeur 65, va alors pouvoir en déterminer la valeur résistive R, laquelle est supérieure à la valeur résistive de repos R₀ de la piste résistive 62, c'est-à-dire une valeur de résistance de référence R₀.

Puis, l'unité de contrôle 64 détermine, à partir de la valeur de résistance R déterminée et d'une base de donnée mémorisée, la pression gazeuse P régnant dans le conduit de gaz 9, par exemple véhiculant de l'oxygène médical.

Préférentiellement, la base de donnée est obtenue préalablement, par exemple lors du processus de fabrication de la jauge 6 ou ultérieurement via des tests de routine, en réalisant une corrélation entre des valeurs résistives R de la piste résistive 62 et différents diamètres de conduits de gaz soumis à différentes pressions, par exemple des pressions de 0 bar relatif (i.e. pression atmosphérique) à 10 bar relatifs. R₀ désigne la valeur de résistance correspondant à un conduit de gaz soumis à la pression atmosphérique (1 atm = 0 bar relatif).

La base de donnée est préférentiellement intégrée, c'est-à-dire mémorisée, directement au sein du processeur 65 de l'unité de contrôle 64, ou, selon le cas, dans une mémoire dédiée, telle une mémoire flash, coopérant avec le processeur 65.

Avantageusement, après agencement sur le conduit de gaz 9, la jauge de contrainte 6 qui est connectée, c'est-à-dire (télé)communicante, est préférentiellement paramétrée via l'interface graphique 71 du dispositif indépendant 7, telle une tablette numérique ou analogue. Les données de paramétrage sont ensuite transmises à distance par les moyens de communication de la tablette ou analogue vers le module de communication 66, comme déjà expliqué.

Comme expliqué ci-après en lien avec Fig. 3, le système de surveillance équipant une installation hospitalière de distribution de gaz 100 selon l'invention comprend préférentiellement plusieurs jauges de contrainte 6, 6a, 6b afin de surveiller différents points du réseau de gaz, typiquement une jauge de contrainte de référence 6 et plusieurs jauges de contrainte 6a, 6b additionnelles ou secondaires.

Dans ce cas, les paramètres de chaque jauge de contrainte 6, 6a, 6b, c'est-à-dire les données de paramétrage, provenant du dispositif de type tablette numérique ou analogue, peuvent être fixés ou sélectionnés par un opérateur et comprennent un identifiant unique (ID) de chaque jauge de contrainte 6, 6a, 6b, le diamètre D du conduit de gaz sur lesquels elles sont installées, une information de localisation relative de la jauge de contrainte de référence 6 et des jauges de contrainte 6a, 6b additionnelles, des données d'appairage des jauges de contrainte, voire d'autres informations utiles, en particulier des données temporelles, c'est-à-dire un horodatage.

Selon un autre mode de réalisation, le processeur 65 de l'unité de contrôle 64 est programmé pour inclure directement les paramètres de chaque jauge, tel que son identifiant (ID) unique, le diamètre du conduit de gaz auquel la (ou les) jauge de contrainte est fixée, et/ou les autres paramètres.

Une fois la valeur de pression P déterminée, l'unité de contrôle 64 est configurée pour transmettre cette pression, ainsi que l'horodatage et l'identifiant unique de la jauge considérée, le diamètre D du conduit de gaz 9, l'appairage à d'autres jauges de contrainte et l'information de localisation, à une plateforme informatique 8 distante pour traitement et exploitation ultérieure des informations.

La télétransmission des données peut se faire à une fréquence donnée, par exemple toutes les 10 millisecondes ou à une autre fréquence adaptée.

Fig. 3 schématise une intégration de plusieurs jauges de contrainte connectées 6, 6a, 6b, conformément à la présente invention, sur le circuit secondaire 3 d'un réseau de distribution de gaz médicaux 101 d'une installation hospitalière de distribution de gaz 100 selon l'invention, lequel est analogue à celui de Fig. 1. Les éléments communs aux Fig. 1 et Fig. 3 ne sont pas répétés ou redétaillés ci-après puisqu'il suffit de se reporter à la description faite ci-dessus en rapport avec Fig. 1.

Comme on le voit, des jauges de contrainte connectées 6, 6a, 6b sont agencées ici à titre d'exemple dans la région du site de ramification 24b du conduit principal 21 et par ailleurs sur les premier et second conduits secondaires 31, 32, afin d'y mesurer la distribution des débits gazeux. Elles fonctionnent comme celle décrite ci-avant, en référence à Fig. 2 ; toutefois, elles pourraient être agencées à d'autres endroits du réseau.

Ces jauges de contrainte 6, 6a, 6b, en particulier les processeurs 65 des unités de contrôle 64 qui sont associées à ces jauges de contrainte 6, 6a et 6b, ont été paramétrées par exemple via le dispositif 7 à interface graphique 71, telle une tablette numérique ou analogue. Ces jauges de contrainte 6, 6a, 6b, ou plus précisément les processeurs 65, envoient chacune l'ensemble des données susmentionnées vers la plateforme informatique 8 de traitement de données.

Ainsi, la jauge de contrainte 6, qui sert de jauge de référence, peut être installée sur le réseau secondaire 3 au niveau de l'extrémité aval de la portion aval 24 du conduit principal 21, par exemple au niveau de sa ramification (en 24b) en lesdits premier et second conduits secondaire 31, 32 ou sur le tronçon ou portion aval 24 du conduit principal 21. Par ailleurs, la première jauge de contrainte additionnelle 6a est agencée au niveau de l'extrémité aval 31b du premier conduit secondaire 31, et la seconde jauge de contrainte additionnelle 6b est quant à elle installée au niveau de l'extrémité aval 32b du second conduit secondaire 32.

Lors du paramétrage des jauges de contrainte 6, 6a, 6b, les diamètres D2, D3, qui sont identiques, par exemple de l'ordre de 15 mm, sont renseignés via la tablette numérique ou tout dispositif 7 similaire, ce qui permet de déterminer la pression locale régnant dans le conduit secondaire 3 au niveau des sites de localisation des jauges de contrainte 6, 6a, 6b.

A titre d'exemple, l'envoi des données relatives à chacune des jauges de contrainte connectées 6, 6a, 6b vers la plateforme de traitement 8 peut se faire sous forme de paquets de données :
- Jauge de référence 6 : T, J1, D1, P1, 0, 0
- Première jauge additionnelle 6a : T, J2, D2, P2, RefJ1, L1
- Seconde jauge additionnelle 6b : T, J3, D3, P3, RefJ1, L2 où :
- T est une donnée temporelle, c'est-à-dire un horodatage, par exemple de la forme JJ/MM/AA XXhXXminXXsXXms.
- J1, J2, J3 sont les identifiants (ID) uniques des jauges 6, 6a, 6b.
- D1, D2 sont les diamètres des conduits de gaz médical sur lequel les jauges6, 6a, 6b sont installées.
- P1, P2, P3 sont les pressions locales régnant dans les conduits au niveau des jauges 6, 6a, 6b considérées.
- RefJ1 est l'identifiant de la jauge de contrainte de référence 6 (ID = J1) à laquelle les jauges de contrainte additionnelles 6a, 6b sont appairées.
- L1, L2 sont les distances (en mètres) séparant les jauges de contrainte additionnelles 6a, 6b de la jauge de référence 6.

La jauge de contrainte de référence 6 étant le point de référence pour les jauges de contrainte additionnelles 6a, 6b, elle n'est appairée à aucune autre jauge de contrainte connectée, donc son appairage est désigné par « 0 » et sa localisation relative est aussi désignée par « 0 » dans le paquet de données qui la concerne.

A titre d'exemple illustratif, on considère que la pression au niveau de la jauge de contrainte 6 de référence, c'est-à-dire régnant à l'extrémité aval 24b de la portion aval 24, est de 4.5 bar, alors que la pression régnant dans le premier conduit secondaire 31 au niveau de la jauge de contrainte 6a est de 4.2 bar, et celle régnant dans le second circuit secondaire 32 au niveau de la jauge de contrainte 6b est de 3.8 bar.

Comme expliqué ci-avant, les jauges de contrainte 6, 6a et 6b vont voir leur piste résistive 62 refléter une valeur résistive conforme à la déformation liée à la pression, des différents conduits sur lesquels les jauges de contrainte 6, 6a et 6b sont agencées. Les processeurs 65 de l'unité de contrôle 64 associés au différentes jauges de contrainte 6, 6a et 6b sont alors en mesure de transformer les différentes valeurs résistives des pistes résistives 62 en pression, soit une pression de 4.5 bar pour la jauge de contrainte 6, une pression de 4.2 bar pour la jauge de contrainte 6a, et une pression de 3.8 bar pour la jauge de contrainte 6b.

Si la distance entre la jauge de contrainte 6 de référence et la première jauge de contrainte 6a est de 50 mètres, et celle entre la seconde jauge de contrainte 6 et la jauge de contrainte 6b est de 30 mètres, les électroniques, i.e. processeurs 65 des unités de contrôle 64, des jauges de contrainte 6, 6a et 6b vont envoyer à une fréquence donnée, par exemple toutes les 10ms, des « paquets » ou ensembles de données vers la plateforme de traitement 8, tel un serveur informatique distant, comme illustré dans Tab. 1 suivant.

**Tab. 1**

| Jauge | Horodatage | ID | D (mm) | P (bar) | Réf. | L (m) |
|---|---|---|---|---|---|---|
| 6 | 14/4/2000 | J1 | 15 | 4.5 | 0 | 0 |
| | 10h40mn37s150ms | | | | | |
| 6a | 14/4/2000 | J2 | 15 | 4.2 | J1 | 50 |
| | 10h40mn37s150ms | | | | | |
| 6b | 14/4/2000 | J3 | 15 | 3.8 | J1 | 30 |
| | 10h40mn37s150ms | | | | | |

Lors de la réception de ces ensembles de données au niveau de la plateforme de traitement 8, il est possible d'en extraire les débits circulant respectivement dans les premier et second conduits secondaires 31, 32.

En effet, tout débit circulant dans un conduit donné entraine une perte de charge qui est fonction de la nature du media (dans l'exemple ici de l'O₂ gazeux), du diamètre du conduit, de la longueur du conduit et du débit circulant dans le conduit considéré.

Ainsi, connaissant la nature du gaz (i.e. oxygène) circulant dans le premier conduit secondaire 31, la différence de pression entre les jauges de contrainte connectées 6, 6a, le diamètre D2 du premier conduit secondaire 31 et la longueur séparant les jauges de contrainte connectées 6, 6a, il est possible de déterminer le débit circulant dans le premier conduit secondaire 31 en appliquant l'Equation de Darcy-Weisbach par exemple. Voir par exemple le site Wikipédia qui rappelle cette Equation : https://en.wikipedia.org/wiki/Darcy%E2%80%93Weisbach_equation).

Avantageusement, on peut opérer un prétraitement sur la plateforme de traitement 8 en resynchronisant les pressions mesurées par les jauges de contrainte connectées 6, 6a. En effet sous l'action d'un débit instantané, la propagation de l'onde de pression d'un point A à un point B ne se fait qu'à la vitesse du « son ». Si un débit instantané fixe, par exemple 100L/min, apparait au niveau de la jauge de contrainte connectée 6 de référence, la pression chute au niveau de la jauge de contrainte additionnelle 6a pour atteindre une valeur stable, après que l'onde sonore a voyagé entre les jauges de contrainte 6, 6a considérées. La distance séparant ces jauges étant ici de 30 mètres et la vitesse du son étant d'environ 330 m/s, la pression au niveau de la jauge de contrainte connectée 6a s'établit après un temps de latence de 90 millisecondes (msec) environ. Lors de la resynchronisation des pressions, le ou les algorithmes de traitement déployés sur la plateforme de traitement 8 tiennent compte de ce temps de latence entre les jauges de contrainte appairées afin de ne pas retourner des valeurs erronées de débit circulant dans le réseau de distribution de gaz médicaux.

En exploitant les données retournées par des jauges de contrainte 6, 6a, 6b, il est possible de déterminer, dans la plateforme 8, les débits circulant dans le premier conduit secondaire 31 et dans le second conduit secondaire 32. Ces débits et les autres données (IDs, pression...) peuvent ensuite être affichées sur un écran d'affichage à destination d'un utilisateur, tel un opérateur de réseau, chargé de la surveillance efficace du réseau de distribution de gaz au sein de l'établissement hospitalier considéré.

L'estimation des débits circulant dans les portions du réseau de distribution de gaz médicaux ne se limite pas à des portions droites, i.e. linéaires. En effet, l'équation transformant une perte de charge en un débit peut prendre en compte d'éventuels changement de section, une présence de coudes...

Utiliser un système de surveillance 102 comprenant des jauges de contrainte fixées aux conduits de gaz du réseau 101 d'une installation hospitalière de distribution de gaz 100 est avantageux car leur installation sur les réseaux existants ne nécessite pas d'interrompre les conduits du réseau 101 de l'installation hospitalière 100 et ce, quels que soient les sites du réseau 101 choisis pour leur installation, et permet donc d'assurer une continuité d'approvisionnement en gaz, en particulier une fourniture d'oxygène aux patients en ayant besoin.

A partir des informations/données recueillies et/ou calculées, il est possible de déterminer et d'afficher un score, par exemple un taux de saturation de chacune des portions d'un réseau de distribution de gaz médicaux considéré, afin d'alerter de l'imminence d'une saturation du réseau et donc permettre à l'opérateur de prendre des mesures protectrices adaptées.

D'une façon générale, la présente invention est applicable sur toute installation hospitalière de distribution de gaz 100 comprenant un réseau de distribution de gaz 101 agencé au sein d'un bâtiment hospitalier, en particulier le réseau de distribution d'oxygène médical et le réseau de distribution d'air médical, alimentant les prises de fourniture de gaz murales auxquelles viennent se raccorder des dispositifs médicaux, dès lors que ces réseaux sont identiques ou similaires en termes de construction et par ailleurs soumis aux mêmes exigences normatives, en particulier en termes de pression nominale de distribution et/ou minimale d'alimentation des prises murales.

## Revendications

1. Installation hospitalière de distribution de gaz (100) comprenant un réseau de distribution de gaz (101) comprenant des conduites de gaz (21, 31, 32) agencées dans un établissement hospitalier et un système de surveillance (102) du réseau de distribution de gaz (101), et comprenant en outre :
- une source de gaz (1) reliée fluidiquement à un conduit de gaz principal (21) du réseau de distribution de gaz (101) de l'installation (100),
- un dispositif régulateur de pression (23) agencé sur le conduit de gaz principal (21), le conduit de gaz principal (21) se ramifiant en lesdits plusieurs conduits de gaz secondaires (31, 32), en aval du dispositif régulateur de pression (23), lesdits conduit de gaz principal (21) et secondaires (31, 32) véhiculant du gaz sous pression, et
- des jauges de contrainte (6, 6a, 6b) agencées en aval du dispositif régulateur de pression (23), sur les conduits de gaz principal et/ou secondaires (21, 31, 32) du réseau de distribution de gaz (101),
**caractérisée en ce que** :
- les jauges de contrainte (6, 6a, 6b) sont chacune associées à une unité de contrôle (64) coopérant avec un module de télécommunication (66),
- chaque jauge de contrainte (6, 6a, 6b) comprend une piste résistive (62) déformable configurée pour se déformer proportionnellement à la pression du gaz s'exerçant dans le conduit de gaz (21, 31, 32) sur lequel la jauge de contrainte (6, 6a, 6b) considérée est agencée, et
- l'unité de contrôle (64) est configurée pour :
a) déterminer une résistivité (R) de chacune des jauges de contrainte (6, 6a, 6b) à partir de la déformation de la piste résistive (62) de la jauge de contrainte (6, 6a, 6b) considérée et d'une valeur de résistivité de référence (Ro), et
b) déterminer une pression de gaz à partir de la résistivité (R) de chaque jauge de contrainte (6, 6a, 6b), chaque pression de gaz déterminée reflétant la pression du gaz s'exerçant dans le conduit de gaz (21, 31, 32) sur lequel la jauge de contrainte (6, 6a, 6b) considérée est agencée,
- et l'unité de contrôle (64) et le module de télécommunication (66) sont configurés pour assurer une transmission de données, via ledit module de télécommunication (66), de l'unité de contrôle (64) vers au moins une plateforme de traitement de données distante (8), lesdites données incluant au moins une pression de gaz déterminée par l'unité de contrôle (64).

2. Installation hospitalière selon la revendication 1, **caractérisée en ce que** chaque jauge de contrainte (6, 6a, 6b) comprend une piste résistive (62) déformable agencée sur un support (61.1) comprenant des moyens de fixation (61.2) permettant une fixation à la paroi périphérique externe d'un conduit de gaz (21, 31, 32).

3. Installation hospitalière selon les revendications 1 et 2, **caractérisée en ce que** l'unité de contrôle (64) comprend au moins un processeur.

4. Installation hospitalière selon la revendication 1, **caractérisée en ce qu'**elle comprend en outre la plateforme de traitement de données distante (8) comprenant un serveur informatique, de préférence un serveur « cloud ».

5. Installation hospitalière selon la revendication 1, **caractérisée en ce que** le module de télécommunication (66) est en outre configuré pour communiquer en réception avec un dispositif électronique (7) à interface graphique (7) configuré pour envoyer des données au module de télécommunication (66), de préférence le dispositif électronique (7) est une tablette numérique, un téléphone multifonction ou un ordinateur portable.

6. Installation hospitalière selon la revendication 1, **caractérisée en ce que** le réseau de distribution de gaz (101) comprend des conduites de gaz alimentant des prises de fourniture de gaz murales.

7. Installation hospitalière selon la revendication 1, **caractérisée en ce que** l'unité de contrôle (64) est configurée pour déterminer, à partir de la valeur de résistance R déterminée et d'une base de donnée donnant une correspondance entre pression et résistance R, la pression gazeuse régnant dans lesdits conduits de gaz principal (21) et secondaires (31, 32) véhiculant du gaz sous pression agencés en aval du dispositif régulateur de pression (23).

8. Installation hospitalière selon les revendications 1 et 7, **caractérisée en ce qu'**elle comprend des moyens de mémorisation pour mémoriser la valeur de résistivité de référence (Ro) et la base de donnée.

9. Installation hospitalière selon la revendication 4, **caractérisée en ce que** ladite au moins une plateforme de traitement de données distante (8) est configurée pour déterminer le ou les débits de gaz circulant dans un premier conduit secondaire (31) et/ou dans un second conduit secondaire (32) véhiculant du gaz sous pression agencés en aval du dispositif régulateur de pression (23), à partir d'au moins une mesure de pression.

10. Installation hospitalière selon la revendication 9, **caractérisée en ce que** ladite au moins une plateforme de traitement de données distante (8) est configurée pour afficher le ou les débits de gaz ayant été déterminés sur un écran d'affichage.

11. Installation hospitalière selon la revendication 1, **caractérisée en ce que** la source de gaz (1) contient de l'oxygène ou de l'air, de préférence de l'oxygène liquide (LOX).

12. Installation hospitalière selon la revendication 1 ou 6, **caractérisée en ce que** le réseau de distribution de gaz (101) comprend des conduites de gaz agencées sur une ou des parois de l'établissement hospitalier.

13. Installation hospitalière selon l'une des revendications 1, 6 ou 12, **caractérisée en ce que** le réseau de distribution de gaz (101) comprend des conduites de gaz ayant un diamètre compris entre 10 et 50 mm.

14. Etablissement hospitalier comprenant une installation hospitalière de distribution de gaz (100) selon l'une des revendications précédentes.

15. Procédé de surveillance d'une installation hospitalière de distribution de gaz (100) comprenant un réseau de distribution de gaz (101) comprenant des conduites de gaz (21, 31, 32) agencées dans un établissement hospitalier et un système de surveillance (102) du réseau de distribution de gaz (101) selon l'une des revendications 1 à 13, dans lequel :
ii) on alimente le conduit de gaz principal (21) du réseau de distribution de gaz (101) avec un gaz provenant de la source de gaz (1),
ii) on détermine la résistivité (R) de chacune des jauges de contrainte (6, 6a, 6b) agencées sur le réseau de distribution de gaz (101) à partir de la déformation de la piste résistive (62) de la jauge de contrainte (6, 6a, 6b) considérée et d'une valeur de résistivité de référence (Ro),
iii) on détermine la pression de gaz s'exerçant dans le conduit de gaz (21, 31, 32) sur lequel la jauge de contrainte (6, 6a, 6b) considérée est agencée, à partir de la résistivité (R) de la jauge de contrainte (6, 6a, 6b) considérée,
iv) on transmet au moins une pression de gaz déterminée à au moins une plateforme de traitement de données distante (8),
v) on détermine, au sein de la plateforme de traitement de données distante (8), au moins un débit de gaz à partir d'au moins une mesure de pression, et
vi) on opère un affichage sur un écran d'affichage dudit au moins un débit de gaz déterminé.
